# FASCICULE DE BREVET EUROPEEN

(11) **EP 3 727 937 B1**
(45) Date de publication et mention de la délivrance du brevet: **22.02.2023**
(21) Numéro de dépôt: 18836815.3
(22) Date de dépôt: 19.12.2018
(51) Int. Cl.: B60K 35/00, G06V 10/141, G06V 10/143, G06V 10/147

(54) **DISPOSITIF DE VISUALISATION D'UN HABITACLE DE VÉHICULE, HABITACLE ET PROCÉDÉ DE VISUALISATION ASSOCIÉS**
BETRACHTUNGSVORRICHTUNG FÜR FAHRGASTZELLE EINES FAHRZEUGS, ZUGEHÖRIGES BETRACHTUNGSVERFAHREN UND FAHRGASTZELLE
VEHICLE PASSENGER COMPARTMENT VIEWING DEVICE , ASSOCIATED VIEWING METHOD AND PASSENGER COMPARTMENT

(30) Priorité: 20.12.2017 FR 1762678
(43) Date de publication de la demande: 28.10.2020
(73) Titulaire: Valeo Comfort and Driving Assistance, 94046 Créteil Cedex (FR)
(72) Inventeur: GARNIER, Denis, 94046 Créteil (FR); MAROUDIS, Pantelis, 94046 Créteil (FR); PINCHON, Nicolas, 94046 Créteil (FR)
(74) Mandataire: Delplanque, Arnaud
(86) Numéro de dépôt international: PCT/EP2018/085924
(87) Numéro de publication internationale: WO 2019/121971

(56) Documents cités:
- FR-A1- 3 052 564
- US-A1- 2014 195 096
- US-A1- 2016 191 859
- US-A1- 2016 210 504

## Description

### DOMAINE TECHNIQUE AUQUEL SE RAPPORTE L'INVENTION

La présente invention concerne un dispositif de visualisation d'un habitacle de véhicule.

Elle concerne plus particulièrement un tel dispositif comprenant un capteur d'images et un système optique pour former une image sur le capteur d'images avec un grandissement.

Elle s'applique de manière particulièrement intéressante au suivi de la position d'une main d'un utilisateur du véhicule, ou à la détection d'objets présents sur le plancher ou les sièges du véhicule.

### ARRIERE-PLAN TECHNOLOGIQUE

Certains véhicules automobiles sont équipés aujourd'hui d'une caméra disposée en partie supérieure d'un habitacle du véhicule, à des fins de surveillance ou d'observation de cet habitacle.

FR 3 052 564 A1 et US 2016/210504 A1 peuvent être cités comme exemples de dispositif de visualisation d'un habitacle de véhicule automobile.

Les images capturées par une telle caméra permettent par exemple, via un traitement approprié, de déterminer des positions occupées par une main du conducteur du véhicule, et de déduire de ces positions que le conducteur souhaite activer une fonctionnalité du véhicule (par exemple, qu'il souhaite actionner les essuie-glaces, actionner un système de régulation de la température de l'habitacle, ou encore afficher un itinéraire sur un écran).

Dans une telle application, la main du conducteur est susceptible de se déplacer dans toute une zone donnée. Une caméra dont le champ de vision couvre l'ensemble de cette zone est alors choisie.

Mais la résolution avec laquelle la main du conducteur est visualisée est alors réduite.

En outre, un tel champ de vision, spécifique à une telle application, limite les applications possibles de la caméra installée dans l'habitacle du véhicule.

### OBJET DE L'INVENTION

Dans ce contexte, la présente invention propose un dispositif de visualisation tel que décrit en introduction, dans lequel le système optique comprend des moyens de réglage dudit grandissement, commandables électriquement, le dispositif de visualisation comprenant en outre :
- un système d'éclairage qui comporte :
   - au moins une source de lumière, et
   - un objectif pour former, à partir de la lumière émise par ladite source, un faisceau d'éclairage présentant une dimension transverse, l'objectif étant adapté à être commandé électriquement de manière à régler ladite dimension transverse,
- ainsi qu'une unité de commande programmée pour :
   a) commander les moyens de réglage du système optique pour que le grandissement présente une valeur donnée, et commander conjointement l'objectif du système d'éclairage de manière à régler conjointement la dimension transverse du faisceau d'éclairage et le grandissement du dispositif de visualisation, puis
   b) commander la capture d'une image par le capteur d'images.

Le champ de vision du dispositif de visualisation varie en fonction de son grandissement : plus le grandissement est élevé, et plus le champ de vision du dispositif est étroit (et inversement).

Un compromis doit donc être choisi entre :
- d'une part, un grandissement élevé conduisant à une résolution élevée, et
- d'autre part, un champ de vision suffisamment large pour que l'élément recherché, dont la position ou l'étendue peuvent être inconnues initialement ou variables, soit contenu dans ce champ de vision.

Grâce aux moyens de réglage du système optique, le grandissement du dispositif de vision est ajusté avant de capturer l'image, ce qui permet, pour cette image, d'adapter au mieux le grandissement à l'application visée, à l'élément à visualiser, ou à d'autres paramètres tels que la position de l'élément à visualiser.

Par ailleurs, régler conjointement la dimension transverse du faisceau d'éclairage et le grandissement du dispositif de visualisation permet d'adapter la dimension du faisceau d'éclairage à celles du champ de vision du dispositif de visualisation, ce qui a notamment pour effet d'éviter que la puissance lumineuse reçue par le capteur d'images ne varie de manière incontrôlée lors du réglage du grandissement.

Ce réglage conjoint permet en outre d'éviter d'éclairer inutilement des zones situées hors du champ de vision du dispositif de visualisation, ce qui serait source de pertes d'énergie.

D'autres caractéristiques non limitatives et avantageuses du dispositif de visualisation conforme à l'invention, prises individuellement ou selon toutes les combinaisons techniquement possibles, sont les suivantes :
- les moyens de réglage du système optique comprennent une lentille liquide dont la distance focale est commandable électriquement ;
- l'unité de commande est programmée pour, à l'étape a), commander la distance focale de cette lentille liquide pour que le grandissement présente ladite valeur donnée ;
- l'unité de commande est programmée en outre pour, lors d'une étape c), traiter l'image capturée à l'étape b) de manière à déterminer une dimension caractéristique d'un élément à visualiser ;
- l'unité de commande est programmée en outre pour exécuter plusieurs fois successivement l'ensemble d'étapes a), b) et c) ;
- l'unité de commande est programmée en outre pour, à l'étape a), déterminer ladite valeur du grandissement en fonction de la dimension caractéristique de l'élément à visualiser déterminée lors de l'exécution précédente de l'étape c) ;
- l'unité de commande est programmée en outre pour que ladite valeur, déterminée à l'étape a), soit telle que ladite image représente la totalité dudit élément, avec un grandissement maximal ;
- ledit élément est une main d'un utilisateur du véhicule ;
- ledit élément étant un objet susceptible d'être présent sur le plancher ou sur l'un des sièges du véhicule ;
- ledit élément est l'un des utilisateurs du véhicule ;
- l'unité de commande est programmée en outre pour, à l'étape c), vérifier dans l'image capturée à l'étape b) la présence dudit élément ;
- l'unité de commande est programmée en outre pour exécuter l'étape d'initialisation INIT) suivante : commander lesdits moyens de réglage pour que le grandissement présente une valeur minimale ;
- l'unité de commande est programmée en outre pour exécuter l'étape d'initialisation INIT) lorsque l'étape c) montre que ledit élément est absent de l'image capturée ;
- un champ de vision du dispositif de visualisation inclut :
   - pour une première valeur dudit grandissement, une première zone de l'habitacle, et
   - pour une deuxième valeur dudit grandissement inférieure à ladite première valeur, une deuxième zone de l'habitacle,
   l'unité de commande étant programmée en outre pour, à l'étape a), sélectionner ladite valeur donnée du grandissement parmi lesdites première et deuxième valeurs, en fonction d'une donnée indiquant celle des deux zones de l'habitacle qui est à visualiser ;
- le dispositif de visualisation ayant un champ de vision, l'unité de commande est programmée en outre pour commander ledit objectif de manière à régler la dimension transverse du faisceau d'éclairage en fonction d'une dimension transverse du champ de vision du système de visualisation ;
- l'unité de commande est programmée en outre pour commander ledit objectif de manière à ce que la dimension transverse du faisceau d'éclairage soit égale à la dimension transverse du champ de vision du système de visualisation multipliée par une constante prédéterminée ;
- l'unité de commande est programmée en outre pour, à l'étape a), commander ledit objectif pour régler la dimension transverse du faisceau d'éclairage en fonction de ladite dimension caractéristique de l'élément à visualiser ;
- l'unité de commande est programmée en outre pour commander ledit objectif de manière à régler la dimension transverse du faisceau d'éclairage en fonction de la dimension caractéristique de l'élément à visualiser ;
- l'unité de commande est programmée en outre pour commander ledit objectif de manière à ce que la dimension transverse du faisceau d'éclairage soit égale à la dimension caractéristique de l'élément à visualiser multipliée par une constante prédéterminée ;
- ladite constante est supérieure à 1 ;
- une orientation du faisceau d'éclairage est commandable, et l'unité de commande est programmée en outre pour :
   à l'étape c), traiter l'image capturée à l'étape b) pour déterminer une position dudit élément à visualiser, et
   lors de l'exécution suivante de l'étape a), commander l'orientation du faisceau d'éclairage en fonction de la position de l'élément à visualiser de manière à centrer le faisceau d'éclairage sur l'élément à visualiser ;
- l'objectif du système d'éclairage comprend une lentille liquide dont la distance focale est commandable électriquement, la dimension transverse du faisceau d'éclairage dépendant de cette distance focale, et l'unité de commande est programmée pour régler cette dimension transverse en commandant ladite distance focale ;
- l'unité de commande est programmée en outre pour commander une puissance électrique ou une tension électrique ou un courant électrique d'alimentation de ladite source, de manière à ce que le faisceau d'éclairage présente, indépendamment de sa dimension transverse, une puissance lumineuse par unité de surface constante ;
- une orientation des deux faces de la lentille liquide de l'objectif, l'une par rapport à l'autre, est commandable électriquement, et l'unité de commande est programmée en outre pour commander l'orientation du faisceau d'éclairage en commandant l'orientation de ces deux faces l'une par rapport à l'autre ;
- ladite source émet une lumière présentant des longueurs d'onde situées dans le domaine de l'infra-rouge, et le capteur d'images est sensible à ces mêmes longueurs d'onde situées dans le domaine de l'infra-rouge ;
- le système optique est adapté à être disposé en partie supérieure de l'habitacle du véhicule, le champ de vision du dispositif de visualisation s'étendant en direction d'un plancher de cet habitacle.

L'invention propose également un habitacle de véhicule automobile comprenant un dispositif de visualisation de l'habitacle, le dispositif de visualisation comprenant un capteur d'images et un système optique pour former une image sur le capteur d'images avec un grandissement, le système optique étant disposé en partie supérieure de l'habitacle, un champ de vision du dispositif de visualisation s'étendant en direction d'un plancher de l'habitacle, le système optique comprenant des moyens de réglage dudit grandissement, commandables électriquement, le dispositif de visualisation comprenant en outre :
- un système d'éclairage qui comporte :
   - au moins une source de lumière, et
   - un objectif pour former, à partir de la lumière émise par ladite source, un faisceau d'éclairage présentant une dimension transverse, l'objectif étant adapté à être commandé électriquement de manière à régler ladite dimension transverse,
- ainsi qu'une unité de commande programmée pour :
   a) commander les moyens de réglage du système optique pour que le grandissement présente une valeur donnée, et commander conjointement l'objectif du système d'éclairage de manière à régler conjointement la dimension transverse du faisceau d'éclairage et le grandissement du dispositif de visualisation, puis
   b) commander la capture d'une image par le capteur d'images.
   L'invention propose aussi un procédé de visualisation d'un habitacle de véhicule automobile, mis en oeuvre au moyen :
- d'un capteur d'images,
- d'un système optique pour former une image sur le capteur d'images avec un grandissement, le système optique comprenant des moyens de réglage dudit grandissement commandables électriquement, et
- d'un système d'éclairage qui comporte au moins une source de lumière, et un objectif pour former, à partir de la lumière émise par ladite source, un faisceau d'éclairage présentant une dimension transverse, l'objectif étant adapté à être commandé électriquement de manière à régler ladite dimension transverse,
le procédé comprenant les étapes suivantes :
a) commander les moyens de réglage du système optique pour que le grandissement présente une valeur donnée, et commander conjointement l'objectif du système d'éclairage de manière à régler conjointement la dimension transverse du faisceau d'éclairage et le grandissement du dispositif de visualisation, puis
b) commander la capture d'une image par le capteur d'images.

Les caractéristiques optionnelles du dispositif de visualisation présentées plus haut peuvent aussi s'appliquer à l'habitacle et au procédé de visualisation qui viennent d'être décrits.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement, partiellement et vu de face, un habitacle d'un véhicule automobile équipé d'un dispositif de visualisation de l'habitacle selon un premier mode de réalisation de l'invention,
- la figure 2 représente schématiquement le dispositif de visualisation de la figure 1, plus en détail,
- la figure 3 représente schématiquement les principales étapes d'un procédé de visualisation selon un premier mode de réalisation, mis en oeuvre par le dispositif de visualisation de la figure 1,
- la figure 4 représente schématiquement des images capturées par le dispositif de visualisation de la figure 1,
- la figure 5 représente schématiquement, partiellement et vu de face, un habitacle d'un véhicule automobile équipé d'un dispositif de visualisation selon un deuxième mode de réalisation de l'invention,
- la figure 6 représente schématiquement le dispositif de visualisation de la figure 5, plus en détail, et
- la figure 7 représente schématiquement les principales étapes d'un procédé de visualisation selon un deuxième mode de réalisation, mis en oeuvre par le dispositif de visualisation de la figure 5.

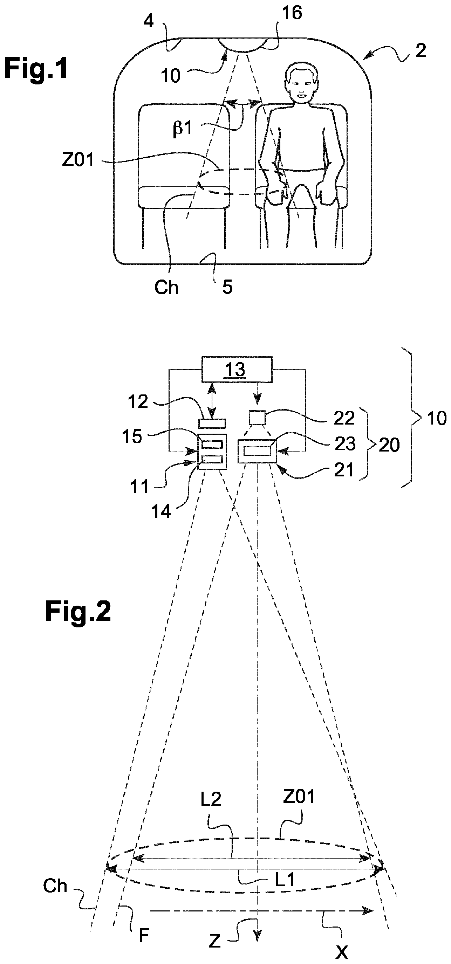

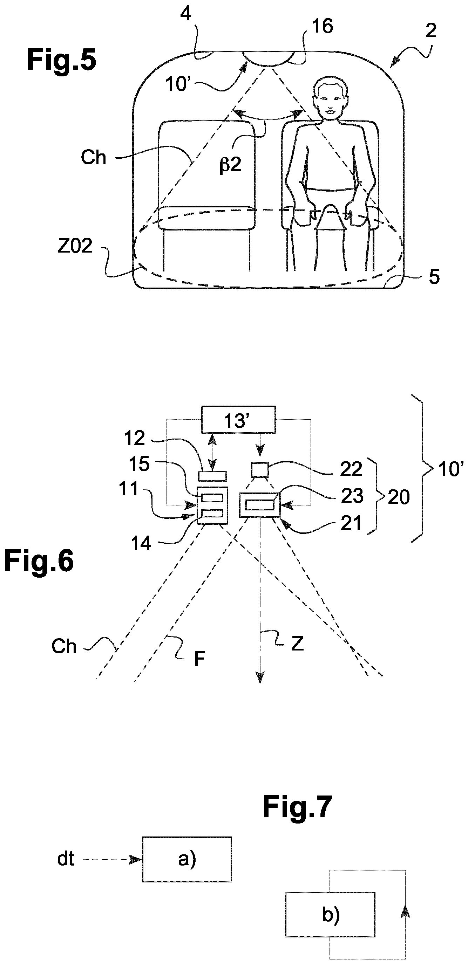

Deux modes de réalisation d'un dispositif de visualisation 10 ; 10' d'un habitacle 2 d'un véhicule automobile sont décrits ci-dessous, en référence respectivement aux figures 1 et 5.

Quel que soit le mode de réalisation considéré, le dispositif de visualisation 10 ; 10' comprend un capteur d'images 12 et un système optique 11 pour former une image sur le capteur d'images 12 avec un grandissement.

Le grandissement est égal à une dimension de l'image d'un objet formée par le système optique 11, divisée par la dimension réelle de cet objet. Ce grandissement est par exemple égal à la largeur de l'image d'une main du conducteur 3 formée sur le capteur d'images 12, divisée par la largeur (réelle) de cette main du conducteur.

De manière remarquable, le système optique 11 comprend des moyens de réglage dudit grandissement, commandables électriquement. Le dispositif de visualisation 10 ; 10' comprend en outre une unité de commande 13 ; 13' programmée pour :
a) commander lesdits moyens de réglage pour que le grandissement présente une valeur donnée, puis
b) commander la capture d'une image par le capteur d'images 12.

Ces dispositions permettent de capturer l'image avec un grandissement (et donc aussi une largeur du champ de vision) adapté au mieux à l'application visée, à l'élément à visualiser, ou à d'autres paramètres tels que la position de l'élément à visualiser.

Les principales différences entre les deux modes de réalisation décrits ici concernent l'unité de commande 13 ; 13', qui est configurée différemment dans le premier, et dans le deuxième mode de réalisation.

Dans ces deux modes de réalisation, les éléments du dispositif de visualisation 10 ; 10' autres que l'unité de commande 13 ;13' sont, pour l'essentiel, identiques. Ils seront d'ailleurs identifiés autant que possible par les mêmes signes de références, et ne seront pas décrits à chaque fois.

Le système optique 11 du dispositif de visualisation 10 ; 10' est adapté à être disposé en partie supérieure de l'habitacle 2 du véhicule, par exemple contre le toit 4 de l'habitacle 2, et de sorte que le champ de vision Ch du dispositif de visualisation 10 ; 10' s'étende en direction d'un plancher 5 de cet habitacle 2 (figures 1 et 5). Pour cela, le système optique 11 et le capteur d'images 12 qui lui est associé peuvent par exemple être intégrés dans une coque 16 en forme de dôme à fixer au toit 4 de l'habitacle.

Dans les modes de réalisation décrits ici, le champ de vision du dispositif de visualisation 10 ; 10' est plus précisément centré sur un axe dirigé vers une console ou vers une partie médiane d'une planche de bord de l'habitacle 2.

La largeur du champ de vision Ch du dispositif de visualisation 10 ; 10' dépend de son grandissement : plus le grandissement est élevé, et plus le champ de vision du dispositif est étroit (et inversement).

Les limites du champ de vision Ch du dispositif de visualisation 10 ; 10' sont représentées schématiquement sur la figure 1 pour une première valeur du grandissement de ce dispositif. Dans cette situation, le champ de vision présente une première ouverture angulaire β1 comprise par exemple entre 20 et 50 degrés.

Le champ de vision Ch du dispositif couvre alors une première zone ZO1 de l'habitacle, qui comprend une interface de commande du véhicule telle qu'un écran tactile, et/ou un ou plusieurs boutons ou manettes de commande du véhicule disposés par exemple sur la planche de bord ou sur la console de l'habitacle. Ainsi, lorsqu'un utilisateur, ici le conducteur 3 du véhicule, est sur le point d'actionner une fonctionnalité de ce véhicule par l'intermédiaire de ces organes de commande (interface, boutons et/ou manettes de commande), sa main se situe dans cette première zone ZO1.

Pour cette première valeur du grandissement, le champ de vision Ch du dispositif de visualisation ne s'étend pas, transversalement, au-delà de cette première zone ZO1, si bien qu'il ne couvre qu'une partie, ici au plus un tiers, de la largeur totale de l'habitacle.

Les limites du champ de vision Ch du dispositif de visualisation sont représentées également sur la figure 5 pour une deuxième valeur du grandissement de ce dispositif, inférieur à la première valeur précitée. Dans cette situation, le champ de vision Ch présente une deuxième ouverture angulaire β2 comprise par exemple entre 60 et 120 degrés.

Le champ de vision Ch du dispositif couvre alors une deuxième zone ZO2 de l'habitacle, plus étendue que la première zone ZO1. En l'occurrence, la deuxième zone ZO2 inclut non seulement cette première zone ZO1 mais aussi une partie au moins, ici la totalité, de l'assise des sièges avant. Ici, la deuxième zone couvre sensiblement toute la largeur de l'habitacle, et inclue une partie du plancher 5. Pour cette deuxième valeur du grandissement, un objet présent sur l'un des sièges avant ou sur le plancher 5 (dans une partie avant de l'habitacle) est ainsi inclus au moins en partie dans le champ de vision Ch du dispositif de visualisation. Dans cette situation, la présence d'un utilisateur sur l'un des sièges avant peut également détectée par le dispositif de visualisation.

Comme déjà indiqué, le système optique 11 comprend des moyens de réglage du grandissement (et donc, conjointement, de la largeur du champ de vision Ch).

Ces moyens de réglage comprennent ici une première et une deuxième lentilles liquides 14 et 15, qui participent à la formation de l'image formée sur le capteur d'images 12. L'expression « lentille liquide » désigne une lentille déformable contenant un fluide. Les distances focales respectives des première et deuxième lentilles liquides 14, 15 peuvent être modifiées par application d'une tension électrique entre deux électrodes de la lentille concernée.

Le grandissement du dispositif de visualisation 10 ; 10' et sa distance de mise au point dépendent des distances focales des première et deuxième lentilles liquides 14, 15, et sont donc commandables électriquement, via les tensions électriques appliquées entre les électrodes de ces lentilles liquides.

Le temps de réaction du système optique à lentilles liquides présenté ci-dessus, en réponse à une commande de changement de son grandissement, est avantageusement court. En particulier, il est généralement plus court que celui d'un système de type zoom, à lentilles conventionnelles. De plus, ces lentilles liquides permettent d'adapter le grandissement du dispositif de visualisation sans pièce mobile, évitant ainsi les phénomènes d'usure ou de grippage.

On peut toutefois envisager, en variante, que le système optique du dispositif de visualisation comprenne des lentilles conventionnelles, plutôt que les lentilles liquides précitées. Dans ce cas, les moyens de réglage du grandissement comprennent un système de déplacement de l'une au moins de ces lentilles conventionnelles, par rapport aux autres.

En variante encore, le système optique pourrait comprendre une seule lentille liquide au lieu de deux, le grandissement du système optique dépendant alors de la distance focale de cette unique lentille liquide, commandée électriquement par l'unité de commande.

Le dispositif de visualisation 10 ; 10' comprend également un système d'éclairage 20 qui comporte :
- au moins une source 22 de lumière, par exemple une diode électroluminescente, et
- un objectif 21 pour former, à partir de la lumière émise par ladite source 22, un faisceau d'éclairage F présentant une dimension transverse L2.

Le faisceau d'éclairage F est centré sur un axe d'éclairage Z. La dimension transverse L2 correspond ici à un diamètre présenté par le faisceau d'éclairage, selon un axe X perpendiculairement à l'axe d'éclairage Z, au niveau de la première zone ZO1 (c'est-à-dire à une distance du dispositif de visualisation sensiblement égale à la distance entre ce dispositif et la première zone ZO1). L'axe X s'étend ici transversalement par rapport à l'habitacle 2 (et donc horizontalement). En variante, la dimension transverse du faisceau d'éclairage pourrait par exemple être égale à la surface d'une section droite présentée par ce faisceau dans la première zone ZO1.

L'objectif 22 est adapté à être commandé électriquement pour régler la dimension transverse L2 du faisceau d'éclairage F. On peut prévoir en outre, comme ici, que l'objectif 22 soit adapté à être commandé électriquement pour régler une orientation de ce faisceau.

Pour cela, l'objectif 22 comprend une troisième lentille liquide 23, dont la distance focale est commandable électriquement.

Commander cette distance focale permet de rendre le faisceau d'éclairage F plus ou moins convergent ou divergent, et donc de régler la dimension transverse L2 qu'il présente au niveau de la première zone ZO1.

Par ailleurs, une orientation des faces de la troisième lentille liquide 23, l'une par rapport à l'autre, est commandable électriquement. Modifier l'orientation des faces de la lentille l'une par rapport à l'autre entraine une modification de la puissance prismatique de la lentille liquide 23, et donc une modification de la déviation du faisceau d'éclairage F introduite par cette lentille. Commander l'orientation des faces de la troisième lentille liquide 23, l'une par rapport à l'autre permet ainsi de régler l'orientation du faisceau d'éclairage F sortant de l'objectif 21.

De manière optionnelle, la forme de l'une des faces de la troisième lentille liquide 23 peut être modifiée, sous l'effet d'autres tensions électriques appliquées entre différentes paires d'électrodes de cette lentille, de manière à régler d'autres caractéristiques du faisceau d'éclairage que sa dimension transverse. Par exemple, en contrôlant un niveau d'astigmatisme introduit par la troisième lentille liquide, via la forme de ladite face de cette lentille, un rapport d'aspect (grand diamètre divisé par le petit diamètre du faisceau) d'une section droite de ce faisceau peut être réglé.

La source 22 de lumière du système d'éclairage 20 émet une lumière présentant des longueurs d'onde situées dans le domaine de l'infra-rouge, et le capteur d'images 12 du dispositif de visualisation 10 ; 10' est sensible à ces mêmes longueurs d'onde du domaine de l'infra-rouge. Un filtre, absorbant plus fortement les longueurs d'ondes du domaine du visible que lesdites longueurs d'onde du domaine de l'infrarouge, peut en outre être disposé en amont du capteur d'images 12. Ces dispositions, optionnelles, permettent d'éviter que le capteur d'images 12 ne soit ébloui par une lumière visible provenant de l'extérieur de l'habitacle. Elles permettent aussi d'éviter que le faisceau d'éclairage F n'éblouisse un utilisateur présent dans l'habitacle 2.

De manière optionnelle, on peut prévoir que le capteur d'images 12 et la source 22 de lumière soient pilotés par l'unité de commande 13 ; 13' pour relever une image tridimensionnelle du contenu de l'habitacle par temps de vol, c'est-à-dire en mesurant des temps de propagation d'impulsions lumineuses, depuis la source 22 qui les émet jusqu'à un élément de l'habitacle, puis de cet élément jusqu'au le capteur d'images 12 (temps de propagation aller-retour).

En l'absence de précautions particulières, modifier le grandissement du dispositif de visualisation a pour inconvénient d'entrainer une variation non contrôlée de la puissance lumineuse parvenant jusqu'au capteur d'images 12, puisque cette modification du grandissement entraîne une variation de la quantité de lumière interceptée par le système optique 11 du dispositif.

De manière remarquable, l'unité de commande 13 ; 13' est alors programmée pour, à l'étape a), commander conjointement l'objectif 21 du système d'éclairage 20 et le système optique 11 du dispositif de visualisation 10 ; 10', de manière à régler conjointement la dimension transverse L2 du faisceau d'éclairage F et le grandissement du dispositif de visualisation.

Régler conjointement ces deux grandeurs permet d'adapter la dimension du faisceau d'éclairage à celles du champ de vision du dispositif de visualisation, ce qui a notamment pour effet d'éviter que la puissance lumineuse reçue par le capteur d'images ne varie de manière incontrôlée lors du réglage du grandissement. Ce réglage conjoint permet en outre d'éviter d'éclairer inutilement des zones situées hors du champ de vision du dispositif de visualisation, ce qui serait source de pertes d'énergie.

On notera que, malgré leurs dénominations différentes, l'objectif 21 du système d'éclairage 20, et le système optique 11 du dispositif de visualisation, sont tous ce qui est couramment appelé un « objectif optique », à savoir un système optique comprenant une ou plusieurs lentilles ou miroirs, permettant de former l'image d'un objet.

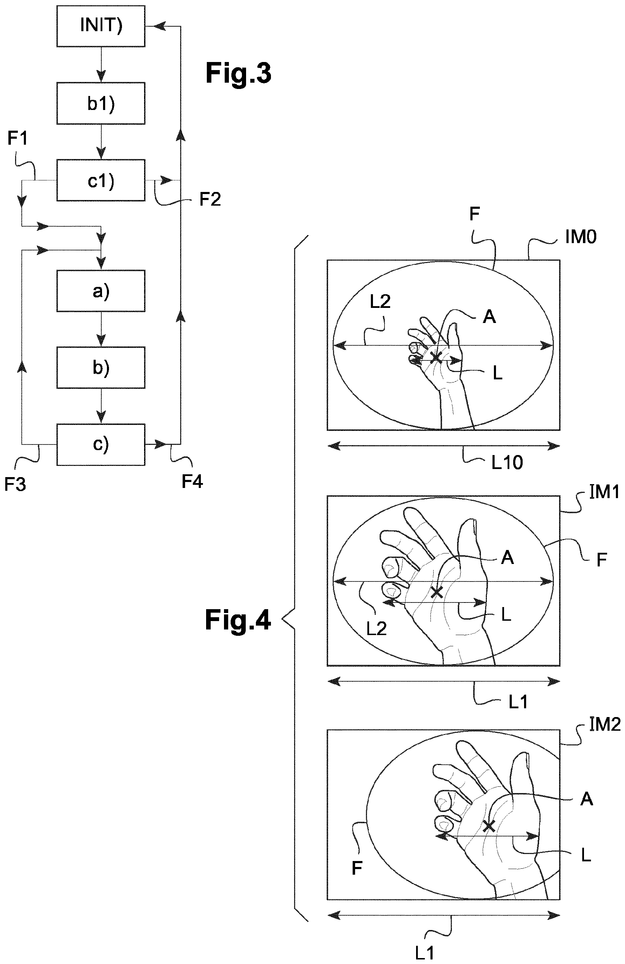

Dans le premier mode de réalisation du dispositif de visualisation 10, l'unité de commande 13 est programmée plus précisément pour mettre en oeuvre le procédé de visualisation représenté schématiquement sur la figure 3.

Au cours de ce procédé, le grandissement du système optique est réglé à des valeurs supérieures ou égales à la première valeur mentionnée précédemment. Le champ de vision Ch du dispositif couvre alors soit la première zone ZO1 (dans laquelle une main de l'utilisateur se situe lorsqu'il est sur le point d'actionner l'un des organes de commande mentionné plus haut), soit une zone de l'habitacle plus petite que la première zone ZO1 et incluse dans celle-ci.

Le procédé de visualisation selon ce premier mode de réalisation permet de visualiser, avec un grandissement et des conditions d'éclairage optimaux, une main de l'utilisateur.

Il s'applique ainsi de manière particulièrement intéressante au suivi de la position de la main de l'utilisateur et/ou à une détermination de l'orientation et de la conformation de sa main. Ce procédé peut notamment être intégré à un procédé d'aide à la conduite, au cours duquel l'unité de commande détermine, en fonction d'une ou plusieurs positions successives de la main de l'utilisation et/ou en fonction de l'orientation et de la conformation de sa main, si une fonctionnalité du véhicule doit être déclenchée.

Ce procédé de visualisation débute par une étape d'initialisation INIT), au cours de laquelle l'unité de commande 13 commande :
- les moyens de réglage du système optique 11 de manière à régler le grandissement du dispositif de visualisation à la première valeur mentionnée plus haut, et, conjointement
- l'objectif 21 du système d'éclairage 20 pour régler la dimension transverse L2 du faisceau d'éclairage F de manière à ce que ce faisceau couvre sensiblement toute la première zone ZO1, sans en dépasser transversalement (figure 2, et image IM0 de la figure 4).

Pour cela, l'objectif 21 du système d'éclairage 20 est commandé ici de manière à ce que la dimension transverse L2 du faisceau d'éclairage F soit égale à une dimension transverse, ici une largeur L10, présentée par champ de vision Ch pour cette première valeur de grandissement (largeur totale du champ de vision Ch, parallèlement à l'axe X, au niveau de la première zone ZO1 à visualiser).

L'étape d'initialisation INIT) est suivie par une étape b1), au cours de laquelle le capteur d'images 12 capture une première image IM0, telle que celle représentée sur la figure 4.

Après l'étape b1), l'unité de commande 13 traite cette première image IM0, lors d'une étape c1), pour déterminer une dimension caractéristique d'un élément à visualiser, ici de la main de l'utilisateur 3.

Cette dimension caractéristique peut être égale à la surface présentée, dans le champ de vision Ch, par l'élément à visualiser. Elle peut aussi être égale à une distance séparant deux points caractéristiques de cet élément. Ici, cette dimension caractéristique correspond à une largeur L présentée par la main de l'utilisateur, selon l'axe X (c'est-à-dire selon l'axe X par rapport auquel le faisceau d'éclairage présente la dimension transverse L2).

A l'étape c1), l'unité de commande 13 détermine aussi, par traitement de la première image IM0, une position, dans cette image, de l'élément à visualiser. Cette position correspond ici à la position du centre A de la main de l'utilisateur.

A l'étape c1), l'unité de commande 13 vérifie aussi, lors du traitement de la première image IM0, que l'élément à visualiser est présent dans le champ de vision Ch du dispositif de visualisation 10.

Lorsque l'étape c1) montre que l'élément à visualiser est absent du champ de vision Ch du dispositif de visualisation, ou en cas d'échec de la détermination de la dimension caractéristique L ou de la position de cet élément, le procédé reprend à l'étape d'initialisation INIT) (flèche F2 de la figure 3).

Lorsque la dimension caractéristique L et la position de l'élément à visualiser ont pu être déterminées à l'étape c1), le procédé se poursuit par l'étape a) (flèche F1 de la figure 3).

### étape a)

Dans ce premier mode de réalisation, l'unité de commande 13 est programmée pour, à l'étape a), déterminer :
- la valeur à laquelle régler le grandissement, et
- la valeur à laquelle régler la dimension transverse L2 du faisceau d'éclairage
en fonction de la dimension caractéristique L de l'élément à visualiser.

Cela permet d'adapter conjointement l'étendue du champ de vision Ch et celle du faisceau d'éclairage F, à l'étendue de l'élément à visualiser.

La dimension caractéristique L et la position de l'élément à visualiser ont été déterminées préalablement, soit à l'étape c1) décrite ci-dessus, soit, comme décrit plus bas, au cours d'une étape c).

Après avoir déterminé lesdites valeurs, l'unité de commande 13 commande les moyens de réglage du système optique 11, et l'objectif 21 du système d'éclairage, pour que le grandissement du dispositif de visualisation 10 et la dimension transverse L2 du faisceau d'éclairage F présentent ces valeurs.

La valeur du grandissement peut par exemple être déterminée, à l'étape a) de manière à ce que l'image formée sur le capteur d'images 12 représente la totalité de l'élément à visualiser, et cela avec un grandissement maximal. Autrement formulé, cette valeur du grandissement peut être égale à la plus grande valeur du grandissement pour laquelle l'élément à visualiser est entièrement inclus dans le champ de vision du dispositif de visualisation.

Cette valeur du grandissement peut aussi être déterminée, comme ici, de manière à laisser une marge donnée (c'est-à-dire une distance minimale) entre l'élément à visualiser et les limites du champ de vision Ch. Cette marge permet d'éviter qu'un éventuel déplacement de l'élément à visualiser (ici la main de l'utilisateur), entre deux captures d'images successives, ne fasse immédiatement sortir cet élément du champ de vision du dispositif de visualisation.

A titre d'exemple, lorsque l'élément à visualiser est situé au centre du champ de vision, la valeur du grandissement peut alors être déterminée pour que le champ de vision présente, au niveau de cet élément à visualiser, une dimension transverse, ici une largeur L1 deux fois plus grande que la dimension caractéristique L de cet élément. La largeur L1 correspond plus précisément à largeur totale du champ de vision Ch, parallèlement à l'axe X, au niveau de l'élément à visualiser.

Augmenter ainsi au maximum le grandissement du dispositif de visualisation, en conservant éventuellement la marge mentionnée ci-dessus, permet, à l'étape b) suivante, de capturer une image IM1 (telle que celle représentée sur la figure 4) représentant cet élément entièrement et avec une résolution maximale.

La position et/ou la conformation de la main de l'utilisateur pourront alors être déterminées, à partir de l'image IM1, avec une précision optimale.

La valeur du grandissement peut être déterminée en outre en fonction de la position de l'élément à visualiser : la valeur de grandissement peut notamment être choisie d'autant plus petite que l'élément à visualiser est décalé par rapport au centre du champ de vision, pour que le champ de vision soit assez large pour inclure cet élément, même s'il est excentré.

Quant à la valeur de la dimension transverse L2 du faisceau d'éclairage F, elle d'autant plus petite que la dimension caractéristique L de l'élément à visualiser est petite, pour éviter d'éclairer inutilement une région beaucoup plus grande que cet élément. La valeur de la dimension transverse L2 déterminée à l'étape a) est toutefois plus grande que celle de ladite dimension caractéristique L, afin d'éclairer entièrement l'élément à visualiser, et pour éviter, en cas de déplacement de cet élément, qu'il ne sorte immédiatement de la région éclairée.

Ici, la valeur de la dimension transverse L2 est plus précisément égale à la dimension caractéristique L de l'élément à visualiser, multipliée par une constante prédéterminée. Cette constante est supérieure à 1. Elle peut par exemple être comprise entre 1,2 et 3.

En variante, au lieu d'être déterminée directement en fonction de la valeur de la dimension caractéristique L de l'élément à visualiser, la valeur de la dimension transverse L2 du faisceau d'éclairage F pourrait être déterminée, à l'étape a) en fonction :
- de la valeur du grandissement, déterminée précédemment au cours de cette même étape, ou
- d'une valeur de la largeur L1 du champ de vision Ch correspondant à cette valeur du grandissement.

La valeur à laquelle régler la dimension transverse L2 du faisceau d'éclairage F peut par exemple être déterminée de manière à être égale à la largeur L1 présentée par le champ de vision pour ladite valeur du grandissement.

Le fait d'adapter la dimension transverse L2 du faisceau d'éclairage F à la dimension caractéristique L de l'élément à visualiser, ou à la largeur L1 du champ de vision Ch, permet de concentrer la puissance lumineuse de ce faisceau là où cet éclairage est utile, ce qui limite la puissance lumineuse totale que doit émettre la source 22 de lumière du système d'éclairage 20, et donc sa consommation électrique.

L'unité de commande 13 est programmée par ailleurs pour, à l'étape a), commander l'orientation du faisceau d'éclairage F, en fonction de la position de l'élément à visualiser (déterminée lors de l'exécution précédente de l'étape c1) ou de l'étape c)), de manière à centrer le faisceau d'éclairage sur cet élément (image IM2 de la figure 4).

Maintenir ainsi le faisceau d'éclairage F centré sur l'élément à visualiser permet de conserver des conditions d'éclairage constantes, pour cet élément. Cela évite par ailleurs que des mouvements de cet élément ne finissent par le faire sortir du faisceau d'éclairage F. Cette disposition s'avère particulièrement intéressante lorsque, comme ici, l'élément à visualiser est la main de l'utilisateur, qui est amenée à largement se déplacer dans la première zone ZO1 lorsque l'utilisateur cherche à actionner l'un des organes de commandes précités.

### étape b)

Après l'étape a), le procédé se poursuit par l'étape b), au cours de laquelle le capteur d'images 12 capture une image (telle que les images IM1 ou IM2 de la figure 4).

Grâce aux réglages du grandissement et de la dimension transverse L2 du faisceau d'éclairage F réalisés à l'étape a), cette image de l'élément à visualiser est capturée avec une résolution maximale et des conditions d'éclairage optimales.

### étape c)

Après l'étape b), le procédé se poursuit par une étape c), au cours de laquelle l'unité de commande 13 traite l'image capturée lors de l'exécution précédente de l'étape b) pour déterminer la dimension caractéristique L de l'élément à visualiser et sa position dans l'image traitée. L'unité de commande 13 vérifie aussi, lors du traitement de cette image, que l'élément à visualiser est présent dans le champ de vision Ch du dispositif de visualisation 10.

Lorsque l'étape c) montre que l'élément à visualiser est absent de ce champ de vision Ch, ou en cas d'échec de la détermination de la dimension caractéristique L ou de la position de cet élément, le procédé reprend à l'étape d'initialisation INIT) (flèche F4 de la figure 3).

Lorsque la dimension caractéristique L et la position de l'élément à visualiser ont pu être déterminées, à l'étape c), le procédé reprend à l'étape a) (flèche F3 de la figure 3).

Ainsi, tant que l'élément à visualiser est présent dans le champ de vision du dispositif (et tant que sa dimension caractéristique et sa position peuvent être déterminées), l'ensemble d'étapes a), b) et c) est exécuté plusieurs fois successivement.

Le grandissement du dispositif de visualisation ainsi que la dimension transverse L2 et l'orientation du faisceau d'éclairage sont alors ajustées continûment en fonction de position et de la dimension de l'élément à visualiser, ce qui est utile notamment lorsque cet élément est particulièrement mobile, comme c'est le cas pour la main d'un utilisateur interagissant avec les organes de commande de l'habitacle 2.

Dans une variante de ce premier mode de réalisation, plutôt que d'exécuter successivement l'étape a), puis b), puis c), puis a), et ainsi de suite, on pourrait prévoir plutôt que :
- l'étape b) soit exécutée plusieurs fois successivement en boucle pour capturer un flot continu d'images, indépendamment des étapes a) et c), et que
- l'ensemble d'étapes c) et a) soit exécuté par ailleurs, plusieurs fois successivement, chaque exécution étant basée une nouvelle image tirée du flot d'images capturées.

Par ailleurs, au cours de ce procédé, il est prévu de manière optionnelle que l'unité de commande 13 pilote une puissance électrique d'alimentation de la source 22 de lumière du système d'éclairage, de manière à ce que le faisceau d'éclairage F présente, sur l'élément à visualiser, indépendamment de sa dimension transverse L2, une puissance lumineuse par unité de surface constante.

Pour cela, la puissance électrique d'alimentation de la source 22 peut par exemple être pilotée en fonction d'un niveau de luminosité de pixels de l'image capturée à l'étape b1) ou b), pour, à la manière d'un asservissement, maintenir ce niveau de luminosité à une valeur cible donnée. On peut prévoir aussi de piloter la puissance électrique d'alimentation de la source 22, en fonction de la valeur de la dimension transverse L2 du faisceau d'éclairage, de manière à ce que la puissance lumineuse totale émise par la source soit d'autant plus petite que cette dimension transverse L2 est petite.

En variante, pour maintenir constante la puissance lumineuse par unité de surface du faisceau d'éclairage, l'unité de commande pourrait piloter une tension ou un courant électrique d'alimentation de la source, plutôt que sa puissance électrique d'alimentation.

Le fait de maintenir constante cette puissance lumineuse par unité de surface permet d'adapter la puissance lumineuse totale émise par la source (et donc sa consommation électrique) à l'étendue de la région à éclairer.

Dans le deuxième mode de réalisation du dispositif de visualisation 10', l'unité de commande 13' est programmée plus précisément pour mettre en oeuvre le procédé de visualisation représenté schématiquement sur la figure 7.

Au cours de ce procédé, le grandissement est réglé, à l'étape a) :
- soit à la première valeur mentionnée plus haut, le champ de vision Ch du dispositif de visualisation couvrant alors la première zone ZO1, et étant limité transversalement à cette première zone ZO1,
- soit à la deuxième valeur mentionnée plus haut, ce champ de vision Ch couvrant alors la deuxième zone ZO2.

L'unité de commande 13' sélectionne soit la première valeur, soit la deuxième valeur, en fonction d'une donnée indiquant celle des deux zones ZO1, ZO2 de l'habitacle qui est à visualiser.

Par ailleurs, au cours de l'étape a), l'unité de commande 13' commande l'objectif 21 pour que le faisceau d'éclairage F :
- s'étende transversalement sur la majeure partie de la première zone ZO1, mais pas à l'extérieur de celle-ci, lorsque la première valeur de grandissement est sélectionnée, et
- s'étende transversalement sur la majeure partie de la deuxième zone ZO2 lorsque la deuxième valeur de grandissement est sélectionnée.

Grâce à ces dispositions, le dispositif de visualisation est optimisé, en termes de grandissement et de largeur du faisceau d'éclairage, aussi bien pour :
- visualiser des objets situés sur les sièges avant ou sur le plancher de l'habitacle, ou pour déterminer si des utilisateurs sont assis sur ces sièges (auxquels cas la deuxième valeur de grandissement est sélectionnée), que pour
- visualiser l'environnement immédiat des organes de commandes (boutons, écran tactile ...) mentionnés plus haut, en particulier une main d'un utilisateur située dans cet environnement (auquel cas la première valeur du grandissement est sélectionnée).

Les premier et deuxième modes de réalisations qui ont été décrits ci-dessus peuvent être combinés.

Pour cela, le premier mode de réalisation peut par exemple modifié de manière à ce que, à l'étape d'initialisation INIT), la valeur à laquelle est commandée le grandissement soit la première valeur ou la deuxième valeur du grandissement (plutôt que d'être égale systématiquement à la première valeur), selon que l'on cherche à visualiser une main d'un utilisateur, ou un objet ou utilisateur susceptible de se trouver à une position quelconque de la deuxième zone ZO2.

On peut prévoir aussi qu'une phase préliminaire soit ajoutée au procédé de visualisation selon le premier mode de réalisation, au cours de laquelle le grandissement est alternativement commandé à la première valeur, puis à la deuxième valeur, puis à nouveau à la deuxième valeur et ainsi de suite, la largeur du faisceau d'éclairage étant réglée conjointement.

Lorsque, au cours cette phase préliminaire, le traitement d'une image capturée pour la première valeur de grandissement montre que la main d'un utilisateur est présente dans la première zone ZO1, alors, le procédé se poursuit par l'étape d'initialisation INIT), exécutée pour la première valeur du grandissement. Au cours des étapes suivantes, les conditions de prise de vue et d'éclairage sont donc réglées en continu pour visualiser au mieux la main de l'utilisateur.

En revanche, lorsque, au cours la phase préliminaire, le traitement d'une image capturée pour la deuxième valeur de grandissement montre qu'un objet est présent sur les sièges avant de l'habitacle, ou sur le plancher, alors, le procédé se poursuit par l'étape d'initialisation INIT), exécutée pour la deuxième valeur du grandissement (c'est-à-dire en commandant le grandissement à la deuxième valeur). Au cours des étapes suivantes, les conditions de prise de vue et d'éclairage sont donc réglées en continu pour visualiser au mieux cet objet, détecté lors de la phase préliminaire.

## Revendications

1. Dispositif de visualisation (10 ; 10') d'un habitacle (2) de véhicule automobile, le dispositif comprenant un capteur d'images (12) et un système optique (11) pour former une image (IM0, IM1, IM2) sur le capteur d'images (12) avec un grandissement, le dispositif de visualisation (10 ; 10') étant **caractérisé en ce que** le système optique (11) comprend des moyens de réglage (14, 15) dudit grandissement, commandables électriquement, et **en ce que** le dispositif de visualisation (10 ; 10') comprend en outre :
- un système d'éclairage (20) qui comporte :
- au moins une source (22) de lumière, et
- un objectif (21) pour former, à partir de la lumière émise par ladite source (22), un faisceau d'éclairage (F) présentant une dimension transverse (L2), l'objectif (21) étant adapté à être commandé électriquement de manière à régler ladite dimension transverse (L2),
- ainsi qu'une unité de commande (13 ; 13') programmée pour :
a) commander les moyens de réglage (14, 15) du système optique (11) pour que le grandissement présente une valeur donnée, et commander conjointement l'objectif (21) du système d'éclairage (20) de manière à régler conjointement la dimension transverse (L2) du faisceau d'éclairage (F) et le grandissement du dispositif de visualisation (10 ; 10'), puis
b) commander la capture d'une image (IM1, IM2) par le capteur d'images (12).

2. Dispositif de visualisation (10 ; 10') selon la revendication 1, dans lequel les moyens de réglage du système optique comprennent une lentille liquide (14, 15) dont la distance focale est commandable électriquement, et dans lequel l'unité de commande (13 ; 13') est programmée pour, à l'étape a), commander la distance focale de cette lentille liquide (14, 15) pour que le grandissement présente ladite valeur donnée.

3. Dispositif de visualisation (10) selon l'une des revendications 1 et 2, dans lequel l'unité de commande (13) est programmée en outre pour :
- lors d'une étape c), traiter l'image (IM1, IM2) capturée à l'étape b) de manière à déterminer une dimension caractéristique (L) d'un élément à visualiser, et
- exécuter plusieurs fois successivement l'ensemble d'étapes a), b) et c),
ladite valeur du grandissement étant déterminée, à l'étape a), en fonction de la dimension caractéristique (L) de l'élément à visualiser déterminée lors de l'exécution précédente de l'étape c).

4. Dispositif de visualisation (10) selon la revendication 3, dans lequel l'unité de commande (13) est programmée en outre pour que ladite valeur, déterminée à l'étape a), soit telle que, pour cette valeur du grandissement, l'image formée (IM1, IM2) par le système optique (11) sur le capteur d'images (12) représente la totalité dudit élément, avec un grandissement maximal.

5. Dispositif de visualisation (10) selon l'une des revendications 3 et 4, dans lequel ledit élément est une main d'un utilisateur (3) du véhicule.

6. Dispositif de visualisation (10') selon l'une des revendications 1 et 2 dans lequel un champ de vision (Ch) du dispositif de visualisation (10') inclut :
- pour une première valeur dudit grandissement, une première zone (ZO1) de l'habitacle (2), et
- pour une deuxième valeur dudit grandissement inférieure à ladite première valeur, une deuxième zone (ZO2) de l'habitacle (2),
et dans lequel l'unité de commande (13') est programmée en outre pour, à l'étape a), sélectionner ladite valeur donnée du grandissement parmi lesdites première et deuxième valeurs, en fonction d'une donnée indiquant celle des deux zones (ZO1, ZO2) de l'habitacle (2) qui est à visualiser.

7. Dispositif de visualisation (10 ; 10') selon l'une des revendications 1 à 6, dans lequel, le dispositif de visualisation (10 ; 10') ayant un champ de vision (Ch), l'unité de commande (13 ; 13') est programmée pour commander ledit objectif de manière à ce que la dimension transverse (L2) du faisceau d'éclairage soit égale à : une dimension transverse (L1) du champ de vision (Ch) du dispositif de visualisation (10 ; 10'), multipliée par une constante prédéterminée.

8. Dispositif de visualisation (10) selon l'une des revendications 3 à 5, dans lequel l'unité de commande (13) est programmée en outre pour, à l'étape a), commander ledit objectif (21) pour régler la dimension transverse (L2) du faisceau d'éclairage (F) en fonction de ladite dimension caractéristique (L) de l'élément à visualiser.

9. Dispositif de visualisation (10) selon la revendication 8, dans lequel l'unité de commande (13) est programmée en outre pour commander ledit objectif (21) de manière à ce que la dimension transverse (L2) du faisceau d'éclairage (F) soit égale à la dimension caractéristique (L) de l'élément à visualiser multipliée par une constante prédéterminée.

10. Dispositif de visualisation (10) selon l'une des revendications 3 à 5, 8 ou 9, dans lequel une orientation du faisceau d'éclairage (F) est commandable, et dans lequel l'unité de commande (13) est programmée en outre pour :
à l'étape c), traiter l'image (IM1, IM2) capturée à l'étape b) pour déterminer une position dudit élément à visualiser, et
lors de l'exécution suivante de l'étape a), commander l'orientation du faisceau d'éclairage (F) en fonction de la position de l'élément à visualiser de manière à centrer le faisceau d'éclairage (F) sur l'élément à visualiser.

11. Dispositif de visualisation (10 ; 10') selon l'une des revendications 1 à 10, dans lequel l'objectif (21) du système d'éclairage (20) comprend une lentille liquide (23) dont la distance focale est commandable électriquement, la dimension transverse (L2) du faisceau d'éclairage (F) dépendant de cette distance focale, l'unité de commande (13 ;13') étant programmée pour régler cette dimension transverse (L2) en commandant ladite distance focale.

12. Dispositif de visualisation (10 ; 10') selon l'une des revendications 1 à 11, dans lequel l'unité de commande (13 ;13') est programmée en outre pour commander une puissance électrique ou une tension électrique ou un courant électrique d'alimentation de ladite source (22), de manière à ce que le faisceau d'éclairage (F) présente, indépendamment de sa dimension transverse (L2), une puissance lumineuse par unité de surface constante.

13. Habitacle (2) de véhicule automobile comprenant un dispositif de visualisation (10 ; 10') de l'habitacle (2), le dispositif de visualisation (10 ; 10') comprenant un capteur d'images (12) et un système optique (11) pour former une image (IM0, IM1, IM2) sur le capteur d'images (12) avec un grandissement, le système optique (11) étant disposé en partie supérieure (4) de l'habitacle (2), un champ de vision (Ch) du dispositif de visualisation (10 ; 10') s'étendant en direction d'un plancher (5) de l'habitacle (2),
**caractérisé en ce que** le système optique (11) comprend des moyens de réglage (14, 15) dudit grandissement, commandables électriquement, et **en ce que** le dispositif de visualisation (10 ; 10') comprend en outre :
- un système d'éclairage (20) qui comporte :
- au moins une source (22) de lumière, et
- un objectif (21) pour former, à partir de la lumière émise par ladite source (22), un faisceau d'éclairage (F) présentant une dimension transverse (L2), l'objectif (21) étant adapté à être commandé électriquement de manière à régler ladite dimension transverse (L2),
- ainsi qu'une unité de commande (13 ; 13') programmée pour :
a) commander les moyens de réglage (14, 15) du système optique (11) pour que le grandissement présente une valeur donnée, et commander conjointement l'objectif (21) du système d'éclairage (20) de manière à régler conjointement la dimension transverse (L2) du faisceau d'éclairage (F) et le grandissement du dispositif de visualisation (10 ; 10'), puis
b) commander la capture d'une image (IM1, IM2) par le capteur d'images (12).

14. Procédé de visualisation d'un habitacle (2) de véhicule automobile, mis en oeuvre au moyen :
- d'un capteur d'images (12),
- d'un système optique (11) pour former une image (IM0, IM1, IM2) sur le capteur d'images (12) avec un grandissement, le système optique (11) comprenant des moyens de réglage (14, 15) dudit grandissement commandables électriquement, et
- d'un système d'éclairage (20) qui comporte au moins une source (22) de lumière, et un objectif (21) pour former, à partir de la lumière émise par ladite source (22), un faisceau d'éclairage (F) présentant une dimension transverse (L2), l'objectif (21) étant adapté à être commandé électriquement de manière à régler ladite dimension transverse (L2),
le procédé comprenant les étapes suivantes :
a) commander les moyens de réglage (14, 15) du système optique (11) pour que le grandissement présente une valeur donnée, et commander conjointement l'objectif (21) du système d'éclairage (20) de manière à régler conjointement la dimension transverse (L2) du faisceau d'éclairage (F) et le grandissement du dispositif de visualisation (10 ; 10'), puis
b) commander la capture d'une image (IM0, IM1, IM2) par le capteur d'images (12).

## Patentansprüche

1. Betrachtungsvorrichtung (10; 10') für eine Fahrgastzelle (2) eines Kraftfahrzeugs, wobei die Vorrichtung einen Bildsensor (12) und ein optisches System (11) umfasst, um ein Bild (IM0, IM1, IM2) auf dem Bildsensor (12) mit einer Vergrößerung zu bilden, wobei die Betrachtungsvorrichtung (10; 10') **dadurch gekennzeichnet ist, dass** das optische System (11) Einstellmittel (14, 15) für die Vergrößerung umfasst, die elektrisch gesteuert werden, und dadurch, dass die Betrachtungsvorrichtung (10; 10') außerdem umfasst:
- ein Beleuchtungssystem (20), das umfasst:
- mindestens eine Lichtquelle (22) und
- ein Objektiv (21) zum Bilden eines Beleuchtungsstrahls (F), der eine Querabmessung (L2) aufweist, auf Grundlage des von der Quelle (22) emittierten Lichts, wobei das Objektiv (21) dazu geeignet ist, elektrisch gesteuert zu werden, so dass die Querabmessung (L2) eingestellt wird,
- sowie eine Steuereinheit (13; 13'), die programmiert ist zum:
a) Steuern der Einstellmittel (14, 15) des optischen Systems (11), damit die Vergrößerung einen bestimmten Wert aufweist, und zusammen damit Steuern des Objektivs (21) des Beleuchtungssystems (20), so dass zusammen damit die Querabmessung (L2) des Beleuchtungsstrahls (F) und die Vergrößerung der Betrachtungsvorrichtung (10; 10') eingestellt wird, dann
b) Steuern der Erfassung eines Bildes (IM1, IM2) durch den Bildsensor (12).

2. Betrachtungsvorrichtung (10; 10') nach Anspruch 1, wobei die Einstellmittel des optischen Systems eine Flüssiglinse (14, 15) umfassen, deren Brennweite elektrisch steuerbar ist, und wobei die Steuereinheit (13; 13') programmiert ist zum Steuern der Brennweite dieser Flüssiglinse (14, 15) in Schritt a), damit die Vergrößerung den bestimmten Wert aufweist.

3. Betrachtungsvorrichtung (10) nach einem der Ansprüche 1 und 2, wobei die Steuereinheit (13) außerdem programmiert ist zum:
- Bearbeiten des in Schritt b) erfassten Bildes (IM1, IM2) in Schritt c), so dass eine charakteristische Abmessung (L) eines zu betrachtenden Elements bestimmt wird,
- Ausführen aller Schritte a), b) und c) mehrmals hintereinander,
wobei der Wert der Vergrößerung in Schritt a) in Abhängigkeit von der charakteristischen Abmessung (L) des bei der vorhergehenden Ausführung von Schritt c) bestimmten zu betrachtenden Elements bestimmt wird.

4. Betrachtungsvorrichtung (10) nach Anspruch 3, wobei die Steuereinheit (13) außerdem so programmiert ist, dass der in Schritt a) bestimmte Wert so beschaffen ist, dass für diesen Vergrößerungswert das durch das optische System (11) gebildete Bild (IM1, IM2) auf dem Bildsensor (12) die Gesamtheit des Elements mit einer maximalen Vergrößerung darstellt.

5. Betrachtungsvorrichtung (10) nach einem der Ansprüche 3 und 4, wobei das Element eine Hand eines Benutzers (3) des Fahrzeugs ist.

6. Betrachtungsvorrichtung (10') nach einem der Ansprüche 1 und 2, wobei ein Blickfeld (Ch) der Betrachtungsvorrichtung (10') beinhaltet:
- für einen ersten Wert der Vergrößerung eine erste Zone (ZO1) der Fahrgastzelle (2) und
- für einen zweiten Wert der Vergrößerung, der kleiner als der erste Wert ist, eine zweite Zone (ZO2) der Fahrgastzelle (2),
und wobei die Steuereinheit (13') außerdem programmiert ist zum Auswählen des bestimmten Wertes der Vergrößerung in Schritt a) aus dem ersten und dem zweiten Wert in Abhängigkeit von einer Dateneinheit, die diejenige der beiden Zonen (ZO1, ZO2) der Fahrgastzelle (2) angibt, die zu betrachten ist.

7. Betrachtungsvorrichtung (10; 10') nach einem der Ansprüche 1 bis 6, wobei die Steuereinheit (13; 13'), da die Betrachtungsvorrichtung (10; 10') ein Blickfeld (Ch) ausweist, programmiert ist zum Steuern des Objektivs, so dass die Querabmessung (L2) des Beleuchtungsstrahls gleich einer Querabmessung (L1) des Blickfelds (Ch) der Betrachtungsvorrichtung (10; 10') multipliziert mit einer vorbestimmten Konstante ist.

8. Betrachtungsvorrichtung (10) nach einem der Ansprüche 3 bis 5, wobei die Steuereinheit (13) außerdem programmiert ist zum Steuern des Objektivs (21) in Schritt a), um die Querabmessung (L2) des Beleuchtungsstrahls (F) in Abhängigkeit von der charakteristischen Abmessung (L) des zu betrachtenden Elements einzustellen.

9. Betrachtungsvorrichtung (10) nach Anspruch 8, wobei die Steuereinheit (13) außerdem programmiert ist zum Steuern des Objektivs (21), so dass die Querabmessung (L2) des Beleuchtungsstrahls (F) gleich der charakteristischen Abmessung (L) des zu betrachtenden Elements multipliziert mit einer vorbestimmten Konstante ist.

10. Betrachtungsvorrichtung (10) nach einem der Ansprüche 3 bis 5, 8 oder 9, wobei eine Ausrichtung des Beleuchtungsstrahls (F) steuerbar ist und wobei die Steuereinheit (13) außerdem programmiert ist zum:
Bearbeiten des in Schritt b) erfassten Bildes (IM1, IM2) in Schritt c), um eine Position des zu betrachtenden Bildes zu bestimmen, und
bei nachfolgender Ausführung von Schritt a) Steuern der Ausrichtung des Beleuchtungsstrahls (F) in Abhängigkeit von der Position des zu betrachtenden Elements, so dass der Beleuchtungsstrahl (F) auf dem zu betrachtenden Element zentriert wird.

11. Betrachtungsvorrichtung (10; 10') nach einem der Ansprüche 1 bis 10, wobei das Objektiv (21) des Beleuchtungssystems (20) eine Flüssiglinse (23) umfasst, deren Brennweite elektrisch steuerbar ist, wobei die Querabmessung (L2) des Beleuchtungsstrahls (F) von dieser Brennweite abhängt, wobei die Steuereinheit (13; 13') programmiert ist zum Einstellen dieser Querabmessung (L2) durch Steuern der Brennweite.

12. Betrachtungsvorrichtung (10, 10') nach einem der Ansprüche 1 bis 11, wobei die Steuereinheit (13; 13') außerdem programmiert ist zum Steuern einer elektrischen Leistung oder einer elektrischen Spannung oder eines elektrischen Stroms zur Versorgung der Quelle (22), so dass der Beleuchtungsstrahl (F) unabhängig von seiner Querabmessung (L2) eine konstante Lichtleistung pro Flächeneinheit aufweist.

13. Fahrgastzelle (2) eines Kraftfahrzeugs, die eine Betrachtungsvorrichtung (10; 10') für die Fahrgastzelle (2) umfasst, wobei die Betrachtungsvorrichtung (10; 10') einen Bildsensor (12) und ein optisches System (11) umfasst, um ein Bild (IM0, IM1, IM2) auf dem Bildsensor (12) mit einer Vergrößerung zu bilden, wobei das optische System (11) im oberen Teil (4) der Fahrgastzelle (2) angeordnet ist, wobei sich ein Blickfeld (Ch) der Betrachtungsvorrichtung (10; 10') in Richtung eines Bodens (5) der Fahrgastzelle (2) erstreckt,
**dadurch gekennzeichnet, dass** das optische System (11) Einstellmittel (14, 15) für die Vergrößerung umfasst, die elektrisch steuerbar sind, und dadurch, dass die Betrachtungsvorrichtung (10; 10') außerdem umfasst:
- ein Beleuchtungssystem (20), das umfasst:
- mindestens eine Lichtquelle (22) und
- ein Objektiv (21) zum Bilden eines Beleuchtungsstrahls (F), der eine Querabmessung (L2) aufweist, auf Grundlage des von der Lichtquelle (22) emittierten Lichts, wobei das Objektiv (21) dazu geeignet ist, elektrisch gesteuert zu werden, so dass die Querabmessung (L2) eingestellt wird,
- sowie eine Steuereinheit (13; 13'), die programmiert ist zum:
a) Steuern der Einstellmittel (14, 15) des optischen Systems (11), damit die Vergrößerung einen bestimmten Wert aufweist, und zusammen damit Steuern des Objektivs (21) des Beleuchtungssystems (20), um damit zusammen die Querabmessung (L2) des Beleuchtungsstrahls (F) und die Vergrößerung der Betrachtungsvorrichtung (10; 10') einzustellen, dann
b) Steuern der Erfassung eines Bildes (IM1, IM2) durch den Bildsensor (12).

14. Betrachtungsverfahren für eine Fahrgastzelle (2) eines Kraftfahrzeugs, das durchgeführt wird mithilfe:
- eines Bildsensors (12);
- eines optischen Systems (11) zum Bilden eines Bildes (IM0, IM1, IM2) auf dem Bildsensor (12) mit einer Vergrößerung, wobei das optische System (11) Einstellmittel (14, 15) für die Vergrößerung umfasst, die elektrisch steuerbar sind, und
- eines Beleuchtungssystems (20), das mindestens eine Lichtquelle (22) und ein Objektiv (21) zum Bilden eines Beleuchtungsstrahls (F), der eine Querabmessung (L2) aufweist, auf Grundlage des von der Lichtquelle (22) emittierten Lichts umfasst, wobei ein Beleuchtungsstrahl (F) eine Querabmessung (L2) aufweist und das Objektiv (21) dazu geeignet ist, elektrisch gesteuert zu werden, so dass die Querabmessung eingestellt wird,
wobei das Verfahren die folgenden Schritte umfasst:
a) Steuern der Einstellmittel (14, 15) für das optische System (11), damit die Vergrößerung einen bestimmten Wert aufweist, und zusammen damit Steuern des Objektivs (21) des Beleuchtungssystems (20), um damit zusammen die Querabmessung (L2) des Beleuchtungsstrahls (F) und die Vergrößerung der Betrachtungsvorrichtung (10; 10') einzustellen, dann
b) Steuern der Erfassung eines Bildes (IM0, IM1, IM2) durch den Bildsensor (12).

## Claims

1. Viewing device (10; 10') of a motor vehicle interior (2), the device comprising an image sensor (12) and an optical system (11) for forming an image (IM0, IM1, IM2) on the image sensor (12) with an enlargement, the viewing device (10; 10') being **characterized in that** the optical system (11) comprises electrically-controllable setting means (14, 15) for setting said enlargement, and **in that** the viewing device (10; 10') further comprises:
- a lighting system (20) which comprises:
- at least one light source (22), and
- a lens (21) for forming, from the light emitted by said source (22), a lighting beam (F) having a transverse dimension (L2), the lens (21) being adapted to be electrically controlled so as to set said transverse dimension (L2),
- and a control unit (13; 13') programmed to:
a) control the setting means (14, 15) of the optical system (11) for the enlargement to have a given value, and jointly control the lens (21) of the lighting system (20) so as to jointly set the transverse dimension (L2) of the lighting beam (F) and the enlargement of the viewing device (10; 10'), then
b) control the capture of an image (IM1, IM2) by the image sensor (12).

2. Viewing device (10; 10') according to Claim 1, wherein the setting means of the optical system comprise a liquid lens (14, 15), the focal distance of which is electrically controllable, and wherein the control unit (13, 13') is programmed to, in the step a), control the focal distance of this liquid lens (14, 15) for the enlargement to have said given value.

3. Viewing device (10) according to one of Claims 1 and 2, wherein the control unit (13) is programmed also to:
- in a step c), process the image (IM1, IM2) captured in the step b) so as to determine a characteristic dimension (L) of an element to be viewed,
- execute all of the steps a), b) and c) several times in succession,
said value of the enlargement being determined, in the step a), as a function of the characteristic dimension (L) of the element to be viewed determined upon the preceding execution of the step c).

4. Viewing device (10) according to Claim 3, wherein the control unit (13) is programmed also for said value, determined in the step a), to be such that, for this value of the enlargement, the image formed (IM1, IM2) by the optical system (11) on the image sensor (12) represents all of said element, with a maximum enlargement.

5. Viewing device (10) according to one of Claims 3 and 4, wherein said element is a hand of a user (3) of the vehicle.

6. Viewing device (10') according to one of Claims 1 and 2, wherein a field of view (Ch) of the viewing device (10') includes:
- for a first value of said enlargement, a first zone (ZO1) of the interior (2), and
- for a second value of said enlargement lower than said first value, a second zone (Z02) of the interior (2),
and wherein the control unit (13') is programmed also to, in the step a), select said given value of the enlargement from among said first and second values, as a function of a datum indicating which of the two zones (Z01, Z02) of the interior (2) is to be viewed.

7. Viewing device (10; 10') according to one of Claims 1 to 6, wherein, the viewing device (10; 10') having a field of view (Ch), the control unit (13; 13') is programmed to control said lens in such a way that the transverse dimension (L2) of the lighting beam is equal to: a transverse dimension (L1) of the field of view (Ch) of the viewing device (10; 10'), multiplied by a predetermined constant.

8. Viewing device (10) according to one of Claims 3 to 5, wherein the control unit (13) is programmed also to, in the step a), control said lens (21) to set the transverse dimension (L2) of the lighting beam (F) as a function of said characteristic dimension (L) of the element to be viewed.

9. Viewing device (10) according to Claim 8, wherein the control unit (13) is programmed also to control said lens (21) in such a way that the transverse dimension (L2) of the lighting beam (F) is equal to the characteristic dimension (L) of the element to be viewed multiplied by a predetermined constant.

10. Viewing device (10) according to one of Claims 3 to 5, 8 or 9, wherein an orientation of the lighting beam (F) is controllable, and wherein the control unit (13) is programmed also to:
in the step c), process the image (IM1, IM2) captured in the step b) to determine a position of said element to be viewed, and
upon the next execution of the step a), control the orientation of the lighting beam (F) as a function of the position of the element to be viewed so as to centre the lighting beam (F) on the element to be viewed.

11. Viewing device (10; 10') according to one of Claims 1 to 10, wherein the lens (21) of the lighting system (20) comprises a liquid lens (23), the focal distance of which is electrically controllable, the transverse dimension (L2) of the lighting beam (F) depending on this focal distance, the control unit (13; 13') being programmed to set this transverse dimension (L2) by controlling said focal distance.

12. Viewing device (10; 10') according to one of Claims 1 to 11, wherein the control unit (13; 13') is programmed also to control an electrical power or an electrical voltage or an electrical current supplying said source (22), in such a way that the lighting beam (F) has, independently of its transverse dimension (L2), a constant light power per unit of surface area.

13. Motor vehicle interior (2) comprising a viewing device (10; 10') of the interior (2), the viewing device (10; 10') comprising an image sensor (12) and an optical system (11) for forming an image (IM0, IM1, IM2) on the image sensor (12) with an enlargement, the optical system (11) being disposed in the upper part (4) of the interior (2), a field of view (Ch) of the viewing device (10; 10') extending towards a floor (5) of the interior (2), **characterized in that** the optical system (11) comprises electrically-controllable setting means (14, 15) for setting said enlargement, and **in that** the viewing device (10; 10') further comprises:
- a lighting system (20) which comprises:
- at least one light source (22), and
- a lens (21) for forming, from the light emitted by said source (22), a lighting beam (F) having a transverse dimension (L2), the lens (21) being adapted to be electrically controlled so as to set said transverse dimension (L2),
- and a control unit (13; 13') programmed to:
a) control the setting means (14, 15) of the optical system (11) for the enlargement to have a given value, and jointly control the lens (21) of the lighting system (20) so as to jointly set the transverse dimension (L2) of the lighting beam (F) and the enlargement of the viewing device (10; 10'), then
b) control the capture of an image (IM1, IM2) by the image sensor (12).

14. Method for viewing a motor vehicle interior (2), implemented by means:
- of an image sensor (12),
- of an optical system (11) for forming an image (IM0, IM1, IM2) on the image sensor (12) with an enlargement, the optical system (11) comprising electrically-controllable setting means (14, 15) for setting said enlargement, and
- of a lighting system (20) which comprises at least one light source (22), and a lens (21) for forming, from the light emitted by said source (22), a lighting beam (F) having a transverse dimension (L2), the lens (21) being adapted to be electrically controlled so as to set said transverse dimension (L2),
the method comprising the following steps:
a) controlling the setting means (14, 15) of the optical system (11) for the enlargement to have a given value, and jointly controlling the lens (21) of the lighting system (20) so as to jointly set the transverse dimension (L2) of the lighting beam (F) and the enlargement of the viewing device (10; 10'), then
b) controlling the capture of an image (IM0, IM1, IM2) by the image sensor (12).
